# EUROPÄISCHE PATENTANMELDUNG

(11) **EP 4 530 765 A1**
(43) Veröffentlichungstag der Anmeldung: **02.04.2025**
(21) Anmeldenummer: 23200551.2
(22) Anmeldetag: 28.09.2023
(51) Int. Cl.: G05B 19/042, G05B 23/02

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (5) für eine technische Anlage, insbesondere Fertigungs- oder Prozessanlage, das wenigstens einen Operator Station Server (7) und wenigstens einen mit dem Operator Station Server (7) verbundenen Operator Station Client (6) umfasst, wobei der Operator Station Server (7) dazu ausgebildet ist, Informationen für eine Bedienung und Beobachtung der technischen Anlage an den Operator Station Client (6) zu übertragen.

Das Leitsystem (5) ist dadurch gekennzeichnet, dass der Operator Station Client (6) dazu ausgebildet ist, zur Laufzeit der technischen Anlage eine Anweisung von einem Operator zu empfangen und an den Operator Station Server (7) zu übermitteln, welche Anweisung eine oder mehrere Bedingungen für die Erzeugung eines akustischen, haptischen und/oder visuellen Signals innerhalb der technischen Anlage umfasst, wobei der Operator Station Server (7) dazu ausgebildet ist, die Erfüllung der einen oder mehreren Bedingungen zu überwachen und für den Fall der Erfüllung der einen oder mehreren Bedingungen die Erzeugung des akustischen, haptischen und/oder visuellen Signals zu triggern.

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems für eine technische Anlage.

Für die Bedienung und Beobachtung verfahrenstechnischer Anlagen werden neben grafischen Anzeigen zu Prozessobjekten über die Blocksymbole, Faceplates, Meldefolgeanzeigen, mit Gruppenalarmen dynamisierte Bildhierarchien, usw. auch akustische Ausgaben - Alarmtöne -- unterstützt. Tritt ein Alarm eines Prozessobjekts auf, so kann entsprechend der jeweiligen Alarmklasse und des technologischen Pfades, unter dem das Prozessobjekt aufgehängt ist, ein dafür vorgesehener Alarmton im Operator Station Client ausgegeben werden, um die Aufmerksamkeit des Operators zu wecken. Wurde der Operator auf einen Alarm durch eine akustische Ankündigung (engl. Annunciation) aufmerksam gemacht, kann er diese im "Operating View" des Operator Station Clients stummschalten und den oder die Alarme über Meldefolgeanzeigen usw. näher untersuchen und beheben.

Da sich Operatoren nicht ausschließlich in der Warte einer verfahrenstechnischen Anlage, sondern mitunter auch im Feld aufhalten, ist es nicht ausreichend Alarme ausschließlich in Operator Station Clients akustisch oder visuell auszugeben, sondern es wird für die Ausgabe im Feld eine entsprechende Hardware wie Signalleuchten oder Signalhörner benötigt.

Nach dem Stand der Technik werden Geräte zur Verkündung von akustischen oder visuellen (Warn-)Signalen ausschließlich im Engineering (also in einer Projektierungsphase einer Automatisierung) konfiguriert, indem in Abhängigkeit von Alarmklassen und technologischen Pfaden unterschiedliche Verkündungsgeräte mit unterschiedlichen Tönen oder Hardware ausgelöst werden.

Für ein situationsbedingtes und proaktives Alarmmanagement zur Laufzeit sind derartige Verkündungsgeräte bzw. deren Konfiguration nach dem Stand der Technik nicht ausgelegt. Z.B. kann sich kein Operator, solange er sich im Feld aufhält, proaktiv darauf hinweisen lassen, dass ein Schwellwert überschritten wird, noch bevor ein herkömmlicher Alarm ausgelöst wird.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Die EP 0 511 651 A2 offenbart eine Überwachung eines Fluidsystems, wobei beim Überschreiten von vorgegebenen Schwellwerten ein Alarmsystem benachrichtigt wird, welches entsprechende Alarme für Operatoren erzeugt.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch ein Verfahren zum Betreiben eines Leitsystems für eine technische Anlage gemäß Anspruch 11. Vorteilhafte Weiterbildungen ergeben sich aus den abhängigen Ansprüchen.

Ein erfindungsgemäßes Leitsystem für eine technische Anlage, insbesondere Fertigungs- oder Prozessanlage, umfasst wenigstens einen Operator Station Server und wenigstens einen mit dem Operator Station Server verbundenen Operator Station Client umfasst, wobei der Operator Station Server dazu ausgebildet ist, Informationen für eine Bedienung und Beobachtung der technischen Anlage an den Operator Station Client zu übertragen.

Das erfindungsgemäße Leitsystem ist dadurch gekennzeichnet, dass der Operator Station Client dazu ausgebildet ist, zur Laufzeit der technischen Anlage eine Anweisung von einem Operator zu empfangen und an den Operator Station Server zu übermitteln, welche Anweisung eine oder mehrere Bedingungen für die Erzeugung eines akustischen, haptischen und/oder visuellen Signals innerhalb der technischen Anlage umfasst, wobei der Operator Station Server dazu ausgebildet ist, die Erfüllung der einen oder mehreren Bedingungen zu überwachen und für den Fall der Erfüllung der einen oder mehreren Bedingungen die Erzeugung des akustischen, haptischen und/oder visuellen Signals zu triggern.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Fertigungsindustrie wie Werke, in denen z.B. Autos oder Güter aller Art produziert werden. Technische Anlagen können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann neben dem Operator Station Server und dem Operator Station Client auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zu einem Engineering/Projektierung wie einen Engineering Station Server aufweisen. Das Leitsystem kann optional auch weitere Recheneinheiten für komplexere Regelungen und Systeme zur Datenspeicherung und -verarbeitung wie einen Archivserver oder einen Verwaltungsserver umfassen.

Unter einem "Operator Station Server" wird vorliegend ein Server verstanden, der zentral Daten eines Bedien- und Beobachtungssystems sowie in der Regel Alarm- und Messwertarchive des Leitsystems für die technische Anlage erfasst und menschlichen Benutzern (Operatoren) zur Verfügung stellt. Der Operator Station Server stellt in der Regel eine Kommunikationsverbindung zu Automatisierungsgeräten des Leitsystems her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener des Leitsystems verstanden. Der Operator interagiert mittels spezieller Benutzerschnittstellen mit dem Leitsystem und bedient sowie beobachtet spezielle technische Funktionen des Leitsystems bzw. der technischen Anlage. Hierzu kann der Operator das Bedien- und Beobachtungssystem des Leitsystems mit dem Operator Station Server und dem Operator Station Client nutzen.

Das erfindungsgemäße Leitsystem empfängt von dem Operator eine Anweisung. Diese Anweisung kann der Operator dem Operator Station Client über eine Tastatur, ein berührungsempfindliches Display eines Tablets oder Smartphones, oder über eine Spracheingabe erteilen. Die Anweisung umfasst eine oder mehrere Bedingungen für die Erzeugung eines akustischen, haptischen und/oder visuellen Signals innerhalb der technischen Anlage. Das akustische Signal kann beispielsweise ein Warnton mit einer vorgebbaren Frequenz und zeitlichen Abfolge sein. Das visuell Signal kann beispielsweise ein blinkendes Grafikobjekt sein (ggf. mit einer speziellen Farbgebung), welches auf einem Monitor des Operator Station Clients dargestellt wird. Das haptische Signal kann beispielsweise ein Vibrieren eines Smartphones sein.

Der Operator Station Server prüft kontinuierlich, ob die Bedingung oder die Bedingungen, die der Operator festgelegt hat, erfüllt sind, indem er beispielsweise ein Archiv überwacht, in welchem aktuelle Messwerte von technischen Objekten der technischen Anlage hinterlegt sind. Wenn die Bedingung oder die Bedingungen erfüllt sind, triggert der Operator Station Server die Erzeugung des akustischen, haptischen und/oder visuellen Signals, um den Operator unmittelbar darauf hinzuweisen, dass die Bedingung oder die Bedingungen erfüllt sind.

Das erfindungsgemäße Leitsystem ermöglicht es dem Operator, individualisierte Signalisierungen festzulegen, die ihn proaktiv und gezielt auf das Vorliegen bestimmter Zustände der technischen Anlage hinweisen - indem ihm das Leitsystem signalisiert, dass von dem Operator vorgegebene Bedingungen erfüllt sind. Im Gegensatz zu bekannten Leitsystemen ermöglicht das erfindungsgemäße Leitsystem die Festlegung von Bedingungen zur Laufzeit der technischen Anlage. Der Begriff "Laufzeit" meint dabei einen bereits stattfindenden Betrieb der technischen Anlage bzw. der Automatisierung für die technische Anlage. Der Operator muss nicht, wie bislang vonnöten, in die Projektierung bzw. das Engineering der technischen Anlage eingreifen bzw. eingreifen lassen, um dort die gewünschte Signalisierung zu projektieren, in eine Sprache der Automatisierung zu übersetzen und auf das Leitsystem zu laden. Die Vorgabe der Bedingungen erfolgt ausschließlich mittels Operator Station Client und Operator Station Server.

Darüber hinaus stellt das erfindungsgemäße Leitsystem dem Operator die Möglichkeit bereit, nicht nur Signalisierungen bezüglich etwaiger vom Leitsystem erzeugter Alarmmeldungen oder Warnmeldungen festzulegen, sondern beliebige Eigenschaften von Messwerten von Messstellen der technischen Anlage als Bedingung vorzugeben. Dadurch kann die Signalisierung deutlich flexibler und individueller vorgenommen werden, als dies im Stand der Technik der Fall war. Infolgedessen wird die Bedienung und Beobachtung der technischen Anlage durch den Operator effizienter und fehlersicherer, was die Anlagenverfügbarkeit deutlich erhöhen kann.

Die eine oder mehreren Bedingungen für die Erzeugung des akustischen, haptischen und/oder visuellen Signals können sich auf das Vorliegen einer Warnmeldung oder einer Alarmmeldung bezüglich eines technischen Objektes der technischen Anlage beziehen. Dabei sind vorzugsweise eine Klasse und/oder eine technologische Zuordnung der Warnmeldung oder der Alarmmeldung in die Bedingung oder die Bedingungen für die Erzeugung des akustischen, haptischen und/oder visuellen Signals einbezogen. Unter einer technologischen Zuordnung wird dabei ein Bezug zu bestimmten technischen Objekten (z.B. einer Pumpe oder einem Motor) der technischen Anlage verstanden.

Die eine oder mehreren Bedingungen für die Erzeugung des akustischen, haptischen und/oder visuellen Signals können sich alternativ oder zusätzlich aber auch auf eine bestimmte Eigenschaft, insbesondere ein Über- oder Unterschreiten eines bestimmten Betrages oder einer bestimmten Änderungsrate, eines Messwertes einer Messstelle, die einem technischen Objekt der technischen Anlage zugeordnet ist, beziehen.

Im Rahmen einer bevorzugten Weiterbildung der Erfindung ist der Operator Station Server dazu ausgebildet, für den Fall der Erfüllung der einen oder mehreren Bedingungen die Erzeugung des akustischen, haptischen und/oder visuellen Signals durch einen Signalgeber, insbesondere ein Signalhorn oder eine Leuchte, zu triggern. Der Signalgeber ist dabei nicht Teil des Operator Station Servers oder des Operator Station Clients, sondern ein zusätzliches Gerät innerhalb der technischen Anlage. Beispielsweise kann ein an sich bekanntes Signalhorn verwendet werden, um den Operator akustisch auf die Erfüllung der Bedingung hinzuweisen.

Für den Fall der Erfüllung der einen oder mehreren Bedingungen kann der Operator Station Server auch dazu ausgebildet sein, die Erzeugung des akustischen, haptischen und/oder visuellen Signals dadurch zu triggern, dass eine entsprechende Anweisung an den Operator Station Client übermittelt wird, einen Signalgeber des Operator Station Clients zu verwenden, insbesondere einen Lautsprecher eines Monitors, Tablets oder Smartphones. Dadurch werden keine zusätzlichen Geräte benötigt, um dem Operator die Erfüllung der Bedingung zu signalisieren.

Dem Operator wird vorteilhafterweise die Möglichkeit gegeben, die Überwachung und damit auch die etwaige Signalisierung auszusetzen bzw. zu unterbrechen. Hierfür kann der Operator Station Client dazu ausgebildet sein, eine weitere Anweisung von dem Operator zu empfangen und an den Operator Station Server zu übermitteln, welche weitere Anweisung für eine Unterbrechung der Überwachung der Erfüllung der einen oder mehreren Bedingungen bis zur Erteilung einer gegenteiligen Anweisung oder für eine bestimmte Zeitdauer ausgebildet ist. Besonders bevorzugt ist das Leitsystem dazu ausgebildet, die Anweisung oder die Anweisungen in einem Datenarchiv zu hinterlegen, um zu einem späteren Zeitpunkt die von dem Operator Station Client empfangenen und an den Operator Station Server übermittelten Anweisungen auslesen zu können. Die ausgelesenen Anweisungen können beispielsweise für statistische Analysen oder für ein Audit Trail relevant sein.

Bei einer vorteilhaften Weiterbildung der Erfindung ist der Operator Station Client dazu ausgebildet, von dem Operator in Verbindung mit der Anweisung oder den Anweisungen Handlungsanweisungen für Operatoren zu empfangen und an den Operator Station Server zu übermitteln, wobei für den Fall der Erfüllung der einen oder mehreren Bedingungen für die Erzeugung eines akustischen, haptischen und/oder visuellen Signals der Operator Station Server dazu ausgebildet ist, die Handlungsanweisungen an den Operator Station Client zu übermitteln, und wobei der Operator Station Client dazu ausgebildet ist, die von dem Operator Station Server empfangenen Handlungsanweisungen dem Operator oder einem anderen Operator visuell und/oder akustisch darzubieten. Mit anderen Worten kann der Operator, der dem Operator Station Client initial die Anweisung übermittelt, zusätzlich vorgeben, dass automatisch eine bestimmte Handlungsanweisung an ihn selbst oder weitere Operatoren von dem Operator Station Client ausgegeben wird, wenn die Bedingung oder die Bedingungen erfüllt sind und die Signalisierung erfolgt. Der Operator oder der weitere Operator können dadurch unmittelbar erfassen, welche Handlungen für den Fall der Erfüllung der Bedingung(en) vorzunehmen sind.

Bevorzugt ist der Operator Station Client dazu ausgebildet, dem Operator oder dem anderen Operator die Handlungsanweisungen zusammen mit der einen oder den mehreren Bedingungen für die Erzeugung eines akustischen, haptischen und/oder visuellen Signals visuell und/oder akustisch darzubieten. Der Operator oder der weitere Operator bekommt dabei beispielsweise eine Textmeldung, dass "der Schwellwert am Tank X um 10% überschritten wurde" und dass "ein Notauslass des Tanks X zu öffnen ist".

Die zuvor formulierte Aufgabe wird zudem gelöst durch ein Verfahren zum Betreiben eines Leitsystems für eine technische Anlage, insbesondere Fertigungsanlage oder Prozessanlage, das wenigstens einen Operator Station Server und wenigstens einen mit dem Operator Station Server verbundenen Operator Station Client umfasst, wobei der Operator Station Server dazu ausgebildet ist, Informationen für eine Bedienung und Beobachtung der technischen Anlage an den Operator Station Client zu übertragen, umfassend:
a) Zur Laufzeit der technischen Anlage, Empfangen einer Anweisung von einem Operator durch den Operator Station Client, welche Anweisung eine oder mehrere Bedingungen für die Erzeugung eines akustischen, haptischen und/oder visuellen Signals innerhalb der technischen Anlage umfasst,
b) Übermitteln der Anweisung an den Operator Station Server,
c) Überwachen der Erfüllung der einen oder mehreren Bedingungen durch den Operator Station Server,
d) Für den Fall der Erfüllung der einen oder mehreren Bedingungen, Triggern der Erzeugung des akustischen, haptischen und/oder visuellen Signals durch den Operator Station Server.

Im Rahmen einer vorteilhaften Weiterbildung der Erfindung der triggert der Operator Station Server für den Fall der Erfüllung der einen oder mehreren Bedingungen die Erzeugung des akustischen, haptischen und/oder visuellen Signals durch einen Signalgeber, insbesondere ein Signalhorn oder eine Leuchte.

Alternativ oder zusätzlich kann der Operator Station Server für den Fall der Erfüllung der einen oder mehreren Bedingungen die Erzeugung des akustischen, haptischen und/oder visuellen Signals dadurch triggert, dass er eine entsprechende Anweisung an den Operator Station Client übermittelt, einen Signalgeber des Operator Station Clients zu verwenden, insbesondere einen Lautsprecher eines Monitors, Tablets oder Smartphones, woraufhin der Operator Station Client die Verwendung seines Signalgebers triggert.

Bevorzugt empfängt der Operator Station Client eine weitere Anweisung von dem Operator und übermittelt diese an den Operator Station Server, welche weitere Anweisung eine Unterbrechung der Überwachung der Erfüllung der einen oder mehreren Bedingungen bis zur Erteilung einer gegenteiligen Anweisung oder für eine bestimmte Zeitdauer durch den Operator Station Server triggert.

Wie bereits ausgeführt, kann das Leitsystem die Anweisung oder die Anweisungen in einem Datenarchiv hinterlegen, um zu einem späteren Zeitpunkt die von dem Operator Station Client empfangenen und an den Operator Station Server übermittelten Anweisungen auslesen zu können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine visuelle Darbietung einer Eingabemaske für Anweisungen durch einen Operator Station Client; und
- FIG 2: ein erfindungsgemäßes Leitsystem in einer schematischen Darstellung.

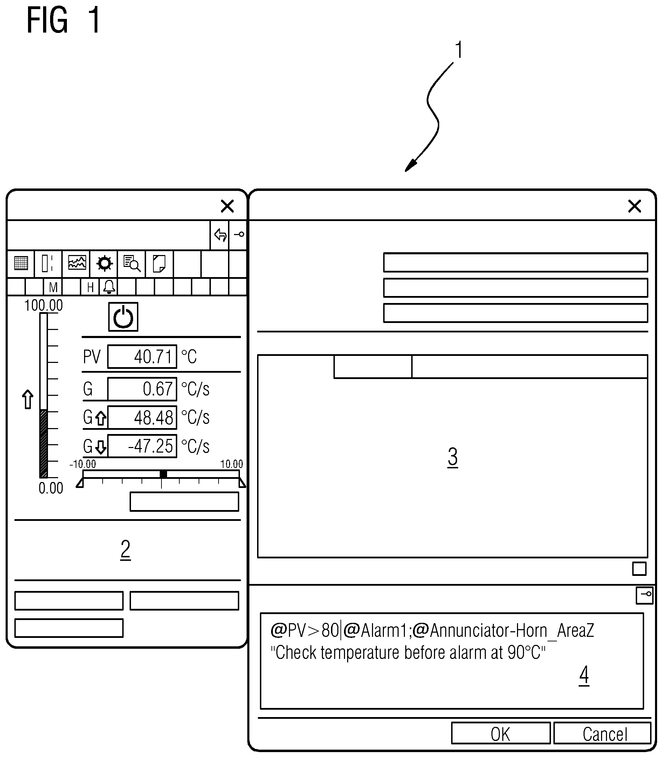

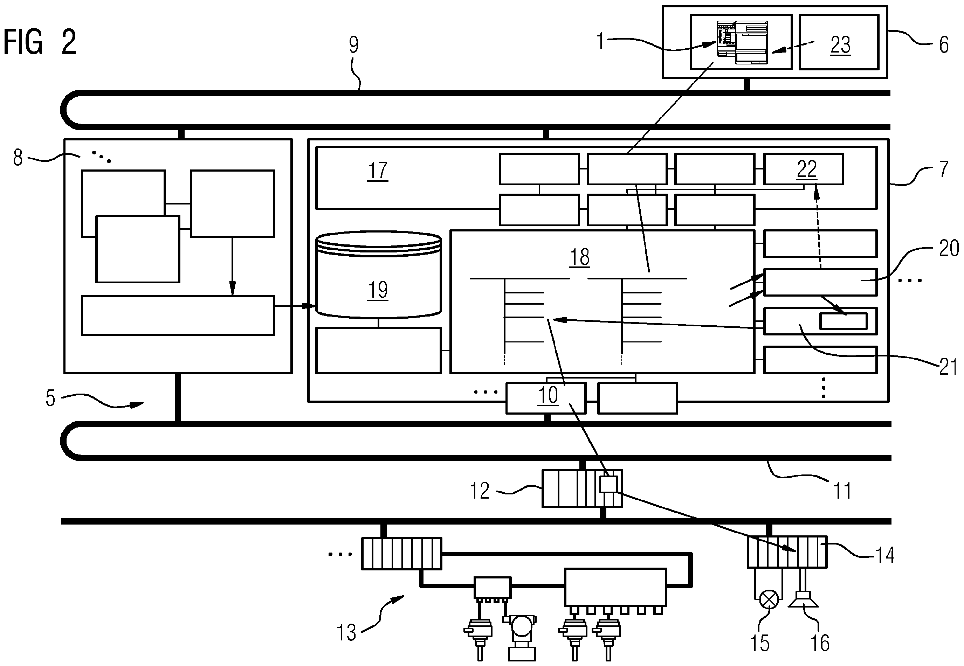

In FIG 1 ist eine grafische Wiedergabe 1 eines Operator Station Clients eines Leitsystems für eine als Prozessanlage ausgebildete technische Anlage dargestellt. Für die technischen Details der Struktur des Leitsystems sei auf die Beschreibung der FIG 2 verwiesen.

Die grafische Wiedergabe 1 umfasst eine Parametersicht 2 eines Prozessobjektes auf der linken Seite von FIG 1. Auf der rechten Seite von FIG 1 ist eine Eingabemaske 3 für Memo Text, welcher dem Prozessobjekt zugeordnet werden kann, dargestellt.

In einem unteren Bereich 4 der Eingabemaske 3 kann ein Operator des Leitsystems Anweisungen hinterlegen. Im vorliegenden Ausführungsbeispiel hat der Operator die Bedingung festgelegt, dass ein Signalhorn im Bereich Z ein Signal ausgeben soll, wenn entweder der Betrag eines zu dem Prozessobjekt gehörigen Prozessmesswertes 80 (Grad Celsius) übersteigt oder der "Alarm1" im Leitsystem auftritt. Zusätzlich hat der Operator eine Handlungsanweisung in dem unteren Bereich 4 hinterlegt, wonach die gemessene Temperatur des Prozessobjektes von dem Operator oder von einem weiteren Operator überprüft werden soll, bevor diese einen Betrag von 90 Grad Celsius erreicht. Diese Handlungsanweisung wird dem Operator oder dem weiteren Operator für den Fall, dass die zuvor erläuterte Bedingung erfüllt ist, visuell und/oder akustisch dargeboten.

In FIG 2 ist ein Leitsystem 5 für die Bedienung und Beobachtung der als Prozessanlage ausgebildeten technischen Anlage schematisch dargestellt. Das Leitsystem 5 umfasst einen Operator Station Client 6, einen Operator Station Server 7 und einen Engineering Station Server 8. Der Operator Station Server 7, der Operator Station Client 6 und der Engineering Station Server 8 sind über einen Terminalbus 9 miteinander und optional mit nicht dargestellten weiteren Komponenten des Leitsystems 5 wie einem Archivserver verbunden.

Ein Benutzer bzw. Operator kann zum Zwecke des Bedienens und Beobachtens über den Operator Station Client 6 mittels des Terminalbus 9 auf den Operator Station Server 7 zugreifen. Der Terminalbus 9 kann, ohne sich darauf zu beschränken, beispielsweise als Industrial Ethernet ausgebildet sein.

Der Operator Station Server 7 weist eine Geräteschnittstelle 10 auf, die mit einem Anlagenbus 11 verbunden ist. Über diese Geräteschnittstelle 10 kann der Operator Station Server 7 mit einem Automatisierungsgerät 12 sowie mit optional vorhandenen weiteren Komponenten des Leitsystems 5 für die technische Anlage wie Peripheriegeräten 13 kommunizieren. Der Anlagenbus 11 kann, ohne sich darauf zu beschränken, beispielsweise als Industrial Ethernet ausgebildet sein. Das Automatisierungsgerät 12 ist über den Anlagenbus 11 mit einem Signalgeber 14 verbunden, welcher eine Leuchte 15 zur visuellen Signalisierung und ein Signalhorn 16 zur akustischen Signalisierung umfasst.

Auf dem Operator Station Server 7 sind (unter anderem) ein Visualisierungsdienst 17, ein Prozessabbild 18, ein Konfigurationsspeicher 19, ein Überwachungsdienst 20 und ein Alarmdienst 21 implementiert. Der in dem Operator Station Server 7 integrierte Visualisierungsdienst 17 initiiert eine Übertragung von Visualisierungsinformationen an den Operator Station Client 6. Der Operator Station Client 6 ist dazu ausgebildet, eine Visualisierung, d.h. eine grafische Darbietung, insbesondere von Anlagenbildern, zum Bedienen und Beobachten der Prozessanlage darzustellen. In dem Prozessabbild 18 des Operator Station Servers 7 ist eine Momentaufnahme der (Signal-)Zustände von mit dem Operator Station Server 7 verbundenen Geräten 12, 13, 14, 15, 16 und/oder Applikationen hinterlegt.

Eine Projektierung bzw. ein Engineering der Automatisierung für die Prozessanlage wird von einem Projekteur auf dem Engineering Station Server 8 erzeugt. Dabei umfasst die Automatisierung, wie an sich bekannt, einen Steuerungsanteil und einen Anteil zur Bedienung und Beobachtung. Der Steuerungsanteil wird in ein passendes, maschinenlesbares Format übersetzt und auf das Automatisierungsgerät 12 sowie ggf. weitere Geräte geladen. Der Anteil zur Bedienung und Beobachtung wird ebenfalls übersetzt und in den Konfigurationsspeicher 19 des Operator Station Servers 7 geladen. Die Automatisierung kann fest gelegte Bedingungen für die Erzeugung von Signalisierungen für den Fall von im Leitsystem 5 auftretender Alarme umfassen. Diese sind jedoch statisch und können zur Laufzeit der Prozessanlage, also nach dem Erstellen und Laden der Automatisierung und während des Betriebes der Prozessanlage, nicht verändert werden.

Der Operator Station Client 6 stellt erfindungsgemäß die Eingabemaske 3 bzw. das untere Eingabefeld 4 gemäß FIG 1 visuell dar. Mittels dieser Anweisungen legt der Operator zur Laufzeit der Prozessanlage in einem ersten Schritt die Bedingung oder die Bedingungen fest, die für die Erzeugung eines akustischen, haptischen und/oder visuellen Signals erfüllt sein müssen. Diese Anweisungen werden an den Operator Station Server 7 übermittelt und dort im Prozessabbild 18 hinterlegt. Darüber hinaus wird der Überwachungsdienst 20 mit der Überwachung der Erfüllung der Bedingung(en) beauftragt. Die Anweisungen sind, wie zuvor erläutert, Teil des Memos des betreffenden Prozessobjektes und werden automatisch mit in einem Datenarchiv (nicht dargestellt) archiviert, was eine spätere Analyse oder ein Audit Trail ermöglicht.

Der Überwachungsdienst 20 führt die Überwachung kontinuierlich durch, indem er das Prozessabbild 18 und den Alarmdienst 21 hinsichtlich der bestimmten Bedingung(en) abfragt. Für den Fall der Erfüllung der Bedingung(en) triggert er einen Signalisierungsdienst 22 des Visualisierungsdienstes 17. Dieser Signalisierungsdienst 22 initiiert auf dem Operator Station Client 6 eine visuelle Darstellung einer Signalisierungsmitteilung 23, welches beispielweise ein textueller Hinweis auf einem Bildschirm des Operator Station Clients 6 sein kann. Durch eine Anwahl der Signalisierungsmitteilung 23 durch den Operator oder durch einen weiteren Operator wird ein Sprung, ein sogenannter Loop-In, auf die Eingabemaske 3, 4 mit den ggf. hinterlassenen Handlungsanweisungen des Operators vorgenommen.

Der Überwachungsdienst 20 triggert zudem die eigentliche Signalisierung, welche vorliegend durch den Signalgeber 14 oder durch den Operator Station Client 6 erfolgen kann. Der Operator wird dadurch individuell und zur Laufzeit der Prozessanlage benachrichtigt/gewarnt, bevor ein eigentlicher Alarm ausgelöst wurde, was zur Erhöhung der Anlagensicherheit und -verfügbarkeit beiträgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (5) für eine technische Anlage, insbesondere Fertigungs- oder Prozessanlage, das wenigstens einen Operator Station Server (7) und wenigstens einen mit dem Operator Station Server (7) verbundenen Operator Station Client (6) umfasst, wobei der Operator Station Server (7) dazu ausgebildet ist, Informationen für eine Bedienung und Beobachtung der technischen Anlage an den Operator Station Client (6) zu übertragen,
**dadurch gekennzeichnet, dass**
der Operator Station Client (6) dazu ausgebildet ist, zur Laufzeit der technischen Anlage eine Anweisung von einem Operator zu empfangen und an den Operator Station Server (7) zu übermitteln, welche Anweisung eine oder mehrere Bedingungen für die Erzeugung eines akustischen, haptischen und/oder visuellen Signals innerhalb der technischen Anlage umfasst, wobei der Operator Station Server (7) dazu ausgebildet ist, die Erfüllung der einen oder mehreren Bedingungen zu überwachen und für den Fall der Erfüllung der einen oder mehreren Bedingungen die Erzeugung des akustischen, haptischen und/oder visuellen Signals zu triggern.

2. Leitsystem (5) nach Anspruch 1, bei dem sich die eine oder mehreren Bedingungen für die Erzeugung des akustischen, haptischen und/oder visuellen Signals auf das Vorliegen einer Warnmeldung oder einer Alarmmeldung bezüglich eines technischen Objektes der technischen Anlage beziehen.

3. Leitsystem (5) nach Anspruch 2, bei dem eine Klasse und/oder eine technologische Zuordnung der Warnmeldung oder der Alarmmeldung in die Bedingung oder die Bedingungen für die Erzeugung des akustischen, haptischen und/oder visuellen Signals einbezogen sind.

4. Leitsystem (5) nach einem der vorangegangenen Ansprüche, bei dem sich die sich die eine oder mehreren Bedingungen für die Erzeugung des akustischen, haptischen und/oder visuellen Signals auf eine bestimmte Eigenschaft, insbesondere ein Über- oder Unterschreiten eines bestimmten Betrages, eines Messwertes einer Messstelle, die einem technischen Objekt der technischen Anlage zugeordnet ist, beziehen.

5. Leitsystem (5) nach einem der vorangegangenen Ansprüche, bei dem der Operator Station Server (7) dazu ausgebildet ist, für den Fall der Erfüllung der einen oder mehreren Bedingungen die Erzeugung des akustischen, haptischen und/oder visuellen Signals durch einen Signalgeber (14), insbesondere ein Signalhorn (16) oder eine Leuchte (15), zu triggern.

6. Leitsystem (5) nach einem der vorangegangenen Ansprüche, bei dem der Operator Station Server (7) dazu ausgebildet ist, für den Fall der Erfüllung der einen oder mehreren Bedingungen die Erzeugung des akustischen, haptischen und/oder visuellen Signals dadurch zu triggern, dass eine entsprechende Anweisung an den Operator Station Client (6) übermittelt wird, einen Signalgeber des Operator Station Clients (6) zu verwenden, insbesondere einen Lautsprecher eines Monitors, Tablets oder Smartphones.

7. Leitsystem (5) nach einem der vorangegangenen Ansprüche, bei dem der Operator Station Client (6) dazu ausgebildet ist, eine weitere Anweisung von dem Operator zu empfangen und an den Operator Station Server (7) zu übermitteln, welche weitere Anweisung für eine Unterbrechung der Überwachung der Erfüllung der einen oder mehreren Bedingungen bis zur Erteilung einer gegenteiligen Anweisung oder für eine bestimmte Zeitdauer ausgebildet ist.

8. Leitsystem (5) nach einem der vorangegangenen Ansprüche, welches dazu ausgebildet ist, die Anweisung oder die Anweisungen in einem Datenarchiv zu hinterlegen, um zu einem späteren Zeitpunkt die von dem Operator Station Client (6) empfangenen und an den Operator Station Server (7) übermittelten Anweisungen auslesen zu können.

9. Leitsystem (5) nach einem der vorangegangenen Ansprüche, bei dem der Operator Station Client (6) dazu ausgebildet ist, von dem Operator in Verbindung mit der Anweisung oder den Anweisungen Handlungsanweisungen für Operatoren zu empfangen und an den Operator Station Server (7) zu übermitteln, wobei für den Fall der Erfüllung der einen oder mehreren Bedingungen für die Erzeugung eines akustischen, haptischen und/oder visuellen Signals der Operator Station Server (7) dazu ausgebildet ist, die Handlungsanweisungen an den Operator Station Client (6) zu übermitteln, und wobei der Operator Station Client (6) dazu ausgebildet ist, die von dem Operator Station Server (7) empfangenen Handlungsanweisungen dem Operator oder einem anderen Operator visuell und/oder akustisch darzubieten.

10. Leitsystem (5) nach Anspruch 9, bei dem der Operator Station Client (6) dazu ausgebildet ist, dem Operator oder dem anderen Operator die Handlungsanweisungen zusammen mit der einen oder den mehreren Bedingungen für die Erzeugung eines akustischen, haptischen und/oder visuellen Signals visuell und/oder akustisch darzubieten.

11. Verfahren zum Betreiben eines Leitsystems (5) für eine technische Anlage, insbesondere Fertigungsanlage oder Prozessanlage, das wenigstens einen Operator Station Server (7) und wenigstens einen mit dem Operator Station Server verbundenen Operator Station Client (6) umfasst, wobei der Operator Station Server dazu ausgebildet ist, Informationen für eine Bedienung und Beobachtung der technischen Anlage an den Operator Station Client (6) zu übertragen, umfassend:
a) Zur Laufzeit der technischen Anlage, Empfangen einer Anweisung von einem Operator durch den Operator Station Client (6), welche Anweisung eine oder mehrere Bedingungen für die Erzeugung eines akustischen, haptischen und/oder visuellen Signals innerhalb der technischen Anlage umfasst,
b) Übermitteln der Anweisung an den Operator Station Server (7),
c) Überwachen der Erfüllung der einen oder mehreren Bedingungen durch den Operator Station Server (7),
d) Für den Fall der Erfüllung der einen oder mehreren Bedingungen, Triggern der Erzeugung des akustischen, haptischen und/oder visuellen Signals durch den Operator Station Server (7) .

12. Verfahren nach Anspruch 11, bei dem der Operator Station Server (7) für den Fall der Erfüllung der einen oder mehreren Bedingungen die Erzeugung des akustischen, haptischen und/oder visuellen Signals durch einen Signalgeber (14), insbesondere ein Signalhorn (16) oder eine Leuchte (15), triggert.

13. Verfahren nach Anspruch 11 oder 12, bei dem der Operator Station Server (7) für den Fall der Erfüllung der einen oder mehreren Bedingungen die Erzeugung des akustischen, haptischen und/oder visuellen Signals dadurch triggert, dass er eine entsprechende Anweisung an den Operator Station Client (6) übermittelt, einen Signalgeber des Operator Station Clients (6) zu verwenden, insbesondere einen Lautsprecher eines Monitors, Tablets oder Smartphones, woraufhin der Operator Station Client (6) die Verwendung seines Signalgebers triggert.

14. Verfahren nach einem der Ansprüche 11 bis 13, bei dem der Operator Station Client (6) eine weitere Anweisung von dem Operator empfängt und an den Operator Station Server (7) übermittelt, welche weitere Anweisung eine Unterbrechung der Überwachung der Erfüllung der einen oder mehreren Bedingungen bis zur Erteilung einer gegenteiligen Anweisung oder für eine bestimmte Zeitdauer durch den Operator Station Server (7) triggert.

15. Verfahren nach einem der Ansprüche 11 bis 14, bei dem das Leitsystem (5) die Anweisung oder die Anweisungen in einem Datenarchiv hinterlegt, um zu einem späteren Zeitpunkt die von dem Operator Station Client (6) empfangenen und an den Operator Station Server (7) übermittelten Anweisungen auslesen zu können.
